Europäisches Patentamt

European Patent Office

Office européen des brevets

(19)

(11) Numéro de publication : **0 296 085 B1**

# (12) FASCICULE DE BREVET EUROPEEN

(45) Date de publication du fascicule du brevet :
**10.07.91 Bulletin 91/28**

(51) Int. Cl.$^5$ : **B60P 7/08**

(21) Numéro de dépôt : **88440040.9**

(22) Date de dépôt : **31.05.88**

(54) **Profil de rive pour plateau porte-charges.**

(30) Priorité : **03.06.87 FR 8707857**

(43) Date de publication de la demande :
**21.12.88 Bulletin 88/51**

(45) Mention de la délivrance du brevet :
**10.07.91 Bulletin 91/28**

(84) Etats contractants désignés :
**AT BE CH DE ES GB GR IT LI LU NL SE**

(56) Documents cités :
**DE-U- 8 617 373
FR-A- 2 392 867
US-A- 3 843 081
US-A- 4 381 123**

(73) Titulaire : **LOHR INDUSTRIE
29, rue du 14 Juillet
F-67980 Hangenbieten (FR)**

(72) Inventeur : **Donnard, René
8, rue des Violettes
F-67400 Geispolsheim (FR)**

(74) Mandataire : **Metz, Paul
Cabinet METZ PATNI 95, rue de la Ganzau
F-67100 Strasbourg (FR)**

EP 0 296 085 B1

## Description

La présente invention se rapporte à un profil de rive rapporté continu pour plateau porte-charges du type selon le préambule de la revendication 1.

Il existe pour l'accrochage des sangles d'arrimage des charges sur les véhicules de transport diverses structures linéaires habillant les rives des planchers des supports de charges.

On peut citer tout d'abord des profilés de section en U sur l'aile inférieure duquel viennent prendre appui les crochets terminant les sangles d'arrimage.

Cette forme technique de support d'accrochage s'avère peu pratique en raison du ripage possible provenant de la structure lisse continue mais surtout en raison de la difficulté importante du décrochage lorsque le support de charge est au sol. En effet, l'intervalle entre l'aile de retenue et le sol s'avère trop faible pour retirer facilement et sans dommage les crochets des sangles d'arrimage.

Or la position au sol correspond bien souvent à la configuration de déchargement.

Une autre structure linéaire d'accrochage se présente sous la forme d'un profilé en U couché, ouvert vers l'extérieur du chargement le long duquel est maintenue en position médiane par des entretoises appropriées une tige support sur laquelle viennent prendre appui les crochets d'extrémité des sangles.

Si cette solution s'avère satisfaisante pour des sangles à cerclage transversal, le maintien des crochets s'avère peu fiable pour les sangles à périmètre circonscrit oblique en raison du risque important de ripage.

La présente invention a pour but de remédier à ces divers inconvénients en proposant un profil de rive pour plateau porte-charges présentant une bonne garantie de maintien en même temps qu'un caractère pratique important.

A cet effet, la présente invention se rapporte à un profil de rive rapporté continu pour plateau porte-charges du type selon le préambule de la revendication 1 caractérisé en ce que le profilé continu rapporté sur chaque rive comporte une face oblique d'accrochage pourvue d'une succession latérale d'ouvertures, ladite face d'accrochage se prolongeant vers le haut par une face d'appui longitudinale selon le chant de rive.

Plusieurs avantages intéressants découlent de la structure linéaire d'accrochage selon l'invention :
- facilité de fabrication par simple tôle emboutie ;
- résistance mécanique accrue grâce aux nervures de rigidification de la tôle emboutie ;
- on peut arimer le porte-charges posé au sol ;
- la forme oblongue de l'embouti permet la pose et l'adaptation de divers accessoires et équipements amovibles en un endroit quelconque, notamment des ridelles, par tout système de fixation du type à verrouillage par quart de tour ;
- l'accessoire ou l'équipement monté est facilement dissociable laissant le profil de rive parfaitement lisse ;
- le crochet est disposé en retrait, c'est-à-dire hors du gabarit routier ;
- l'arrondi du profilé impose la direction générale de la sangle posée et ne peut pas la blesser ;
- le maintien de la sangle oblique est garanti de la même façon que celui de la sangle droite.

Les caractéristiques techniques et d'autres avantages sont consignés dans la description qui suit effectuée à titre d'exemple non limitatif sur un mode d'exécution en référence aux dessins annexés dans lesquels :
- la figure 1 est une vue en perspective d'un profil de rive conforme à l'invention ;
- la figure 2 est une vue en demi-coupe transversale d'une structure porte-charges dont la rive est équipée du profil de rive conforme à l'invention ;
- la figure 3 est une vue de profil d'une structure porte-charges du type conteneur-palette équipée du profil de rive selon l'invention ;
- la figure 4 est une vue en coupe transversale de détail de la structure d'accrochage sur prise de crochet d'une sangle d'arrimage.
- la figure 5 est une vue en perspective d'un profil à deux rangées servant d'ancrage à un poteau.

Le profil de rive selon l'invention se présente sous la forme d'un profilé continu 1 comportant une face longitudinale d'accrochage 2 pourvue d'une pluralité d'ouvertures telles que 3, par exemple oblongues, disposées en succession latérale formant une rangée. Ces ouvertures sont réalisées de préférence par emboutissage dans la tôle du profilé sous la forme de perforations centrées sur la face avant d'accrochage 2. Celle-ci se trouve légèrement inclinée lorsque le profilé 1 est en place c'est-à-dire lorsqu'il habille les rives telles que 4 d'une structure porte-charges 5.

La face d'accrochage 2 se prolonge vers le bas par un retour horizontal 6 et vers le haut par une face latérale d'appui 7 selon le chant de rive raccordée à la face d'accrochage 2 par un arrondi ou cassure d'angle 8.

Le corps du profilé 1 peut être ouvert ou entièrement fermé à l'arrière par une face arrière 9 en appui contre les éléments 10 de l'ossature 11 du plan porteur 12 du porte-charges 5 plate-forme ou conteneur-palette.

Le profilé 1 comporte de préférence une section entièrement fermée dont la partie supérieure est une face 13 lisse ou présentant un épaulement 14 venant porter en appui sur le bord longitudinal du panneau 15 de plancher.

Les ouvertures 3 permettent la fixation des crochets équipant les extrémités des sangles d'arrimage 16 en vue de l'immobilisation du chargement.

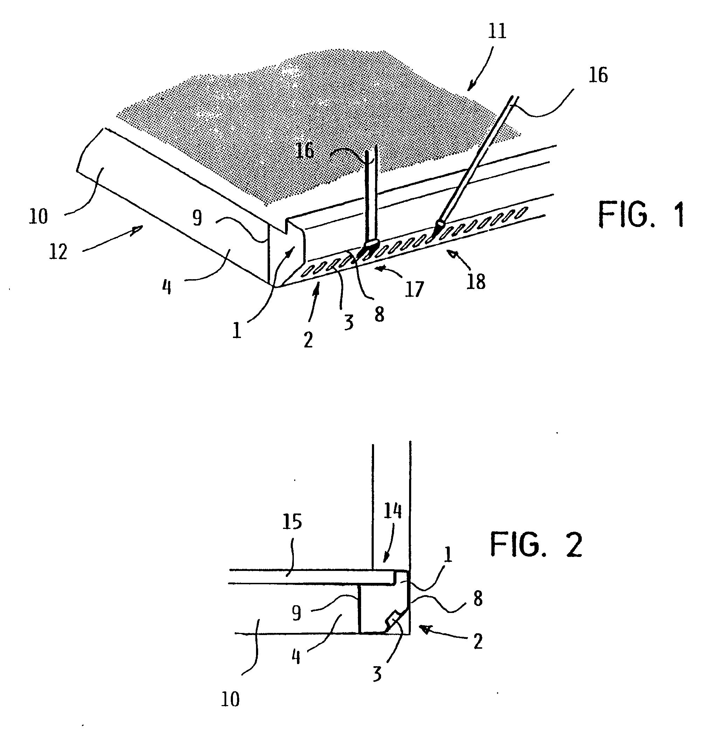

Les ouvertures 3 permettent aussi bien la fixation des sangles en présentation droite par crochet double 17 prenant appui sur deux perforations successives qu'en présentation oblique par crochet simple 18 comme le montre la figure 1.

Bien entendu, l'application du profil de rive pour plateau porte-charges selon l'invention ne se limite pas à la prise d'appui des crochets de sangle d'arrimage, mais au contraire s'étend à l'accrochage de toutes pièces d'équipement et accessoires pouvant équiper les plateaux porte-charges.

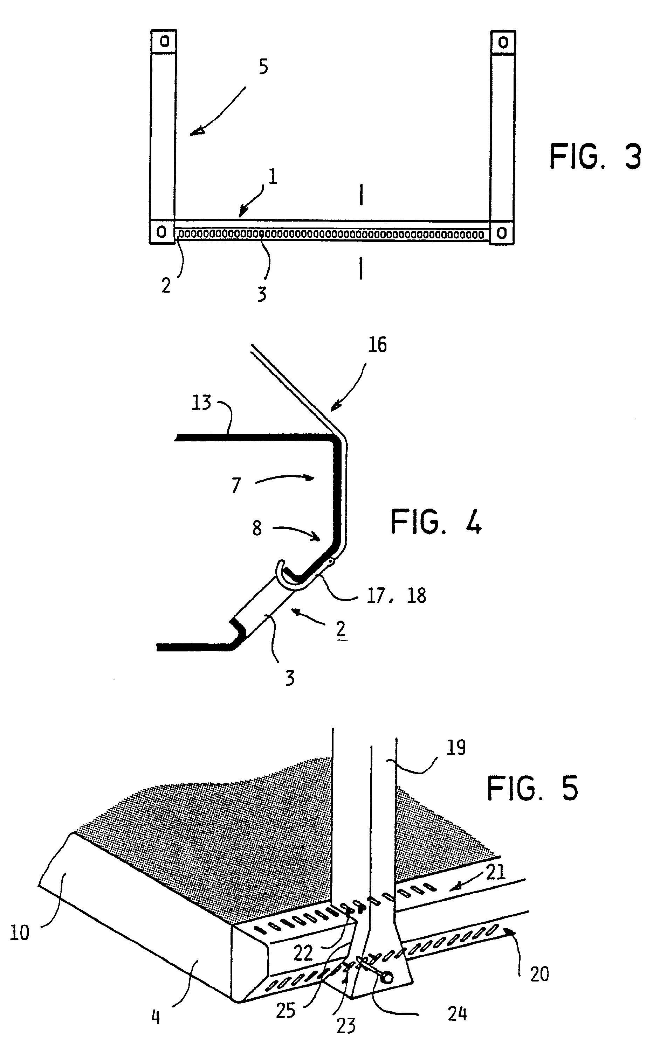

On a représenté sur la figure 5, pour illustrer cette variété d'application, l'accrochage et le maintien d'un poteau 19 sur un profilé à deux rangées 20 et 21 de perforations 3. Le poteau 19 est placé et maintenu à l'aide d'ergots ou de doigts tels que 22 entrant dans les perforations 3 et se trouve verrouillé sur le profilé à l'aide d'un dispositif de solidarisation 23 du type à blocage par quart de tour, actionné par un élément de manoeuvre 24.

Le maintien parfait est obtenu par le dispositif de solidarisation 23 et l'interface d'appui 25 du poteau ou plus généralement de la pièce complémentaire adaptée à la forme du profil et par des plans de centrage.

## Revendications

1. Profil continu rapporté sur chaque rive pour plateau porte-charges (5) permettant l'accrochage des extrémités des sangles d'arrimage (16) ou de diverses pièces d'équipement ou d'accessoires (19), caractérisé en ce que le profilé continu (1) rapporté sur chaque rive comporte une face oblique d'accrochage (2) pourvue d'une succession latérale d'ouvertures (3), ladite face d'accrochage (2) se prolongeant vers le haut par une face d'appui longitudinale selon le chant de rive.

2. Profil selon la revendication 1, caractérisé en ce que la face oblique est en retrait par rapport à la face d'appui.

3. Profil selon les revendications 1 et 2, caractérisé en ce que les ouvertures (3) sont de forme oblongue.

4. Profil selon la revendication 3, caractérisé en ce que les formes oblongues sont transversales.

5. Profil selon les revendications précédentes, caractérisé en ce que les ouvertures (3) sont des perforations obtenues par emboutissage de tôle.

6. Profil selon la revendication 1, caractérisé en ce que le profilé (1) présente une section fermée.

7. Profil selon les revendications 1 et 6, caractérisé en ce que la face supérieure du profilé (1) est lisse.

8. Profil selon les revendications 1 et 6, caractérisé en ce que la face supérieure du profilé (1) présente un épaulement (14).

## Patentansprüche

1. Ununterbrochenes Profil, das auf jeder Seite der Ladebühnen (5) angeordnet ist, das das Festhaken der Enden der Gurte zum Verstauen (16) oder verschiedener Teile von Vorrichtungen und Zubehör (19) erlaubt, dadurch gekennzeichnet, daß das ununterbrochene Profil (1), das an jeder Seite angeordnet ist, eine schräge Seitenfläche zum Festhaken (2) enthält, die mit einer seitlichen Reihe von Öffnungen versehen ist, wobei die Seite zum Festhaken (2) nach oben durch eine Abstützfläche in Längsrichtung entsprechend der Schmalseite des Profils weitergeführt wird.

2. Profil nach Anspruch 1, dadurch gekennzeichnet, daß die schräge Fläche gegenüber der Abstützfläche zurückgesetzt ist.

3. Profil nach Anspruch 1 oder 2, dadurch gekennzeichnet, daß die Öffnungen (3) eine längliche Form aufweisen.

4. Profil nach Anspruch 3, dadurch gekennzeichnet, daß die länglichen Formen in Querrichtung angeordnet sind.

5. Profil nach einem der Ansprüche 1 bis 4, dadurch gekennzeichnet, daß die Öffnungen (3) Schlitze sind, die durch Tiefziehen des Blechs ausgeführt werden.

6. Profil nach Anspruch 1, dadurch gekennzeichnet, daß das Profil (1) einen geschlossenen Querschnitt aufweist.

7. Profil nach Anspruch 1 und 6, dadurch gekennzeichnet, daß die obere Seite des Profils (1) glatt ist.

8. Profil nach Anspruch 1 und 6, dadurch gekennzeichnet, daß die obere Seite des Profils (1) eine Schulterung (14) aufweist.

## Claims

1. Continuous profile section attached to each edge of a load-carrying platform (5), enabling the ends of stowing straps (15), or various pieces of equipment or accessories (19), to be attached, characterised in that the continuous profile section (1) mounted on each edge comprises an oblique attachment face (2), equipped with a succession of lateral openings (3), the said attachment face (2) being extended upwards by a longitudinal supporting face along the narrow side of the edge.

2. Profile section according to claim 1, characterised in that the oblique face is set back in relation to the supporting face.

3. Profile section according to claims 1 and 2, characterised in that the openings (3) are oblong.

4. Profile section according to claim 3, characterised in that the oblongs are transverse.

5. Profile section according to the preceding claims, characterised in that the openings (3) are perforations obtained by swaging sheet metal.

6. Profile section according to claim 1, characterised in that the profile section (1) has a closed section.

7. Profile section according to claims 1 and 6, characterised in that the upper face of the profile section (1) is smooth.

8. Profile section according to claims 1 and 6, characterised in that the upper face of the profile (1) has a shoulder (14).

FIG. 1

FIG. 2

EP 0 296 085 B1

FIG. 3

FIG. 4

FIG. 5